# EUROPEAN PATENT APPLICATION

(11) **EP 4 152 224 A1**
(43) Date of publication of application: **22.03.2023**
(21) Application number: 21802933.8
(22) Date of filing: 17.05.2021
(51) Int. Cl.: G06N 20/00

(54) **MACHINE LEARNING APPLICATION METHOD, DEVICE, ELECTRONIC APPARATUS, AND STORAGE MEDIUM**

(30) Priority: 15.05.2020 CN 202010415370
(71) Applicant: The Fourth Paradigm (Beijing) Tech Co Ltd, Beijing 100085 (CN)
(72) Inventor: ZHANG, Qing, Beijing 100085 (CN); ZHOU, Zhenhua, Beijing 100085 (CN); ZHANG, Shijian, Beijing 100085 (CN); SHI, Guangchuan, Beijing 100085 (CN); FANG, Rong, Beijing 100085 (CN); CHEN, Yuqiang, Beijing 100085 (CN); DAI, Wenyuan, Beijing 100085 (CN); ZHENG, Zhao, Beijing 100085 (CN); HUANG, Yingning, Beijing 100085 (CN)
(74) Representative: Müller Hoffmann & Partner
(86) International application number: PCT/CN2021/094202
(87) International publication number: WO 2021/228264

(57) **Abstract**

A machine learning application method, a device, an electronic apparatus, and a storage medium, used to directly link service scenarios, aggregate data related to the service scenarios, accordingly explore modeling schemes, and ensure that data used in offline modeling scheme exploration and data used in an online model prediction service have the same source, thereby realizing consistency of source of offline and online data. Directly deploying an offline model to an online environment results in data inconsistency between online feature computation and offline feature computation, which in turn causes poor prediction performance; therefore, only a modeling scheme is deployed online, and the offline model is not deployed. After a modeling scheme is deployed online, sample data having a feature and feedback can be obtained by receiving a prediction request, thereby enabling model self-learning by means of the sample data. A model obtained from self-learning is deployed online to ensure that data and a feature engineering scheme used in model self-learning are consistent with data and a feature engineering scheme used in an online model prediction service, respectively, thereby realizing performance consistency between model self-learning and model prediction.

## Description

This disclosure claims priority to Chinese patent application No. 202010415370.7, entitled "METHOD, DEVICE, ELECTRONIC APPARATUS AND STORAGE MEDIUM FOR APPLYING MACHINE LEARNING" filed on May 15, 2020, the disclosure thereof is incorporated by reference into this disclosure.

### TECHNICAL FIELD

The present disclosure generally relates to the technical field of machine learning, and in particular, to a method, device, electronic apparatus, and storage medium for applying machine learning.

### BACKGROUND

The application of machine learning may include, but is not limited to, problem definition, machine learning model establishment (referred to as modeling), model online service, feedback information collection, model iterative update and other processes. At present, modeling is to explore a model based on offline data, and then a model effect is determined based on an offline evaluation method. After the model effect reaches a standard (that is, preset requirements are met), the IT personnel may deploy the model to be launched and perform a model online service.

However, an online effect of the model whose offline effect reaches the standard may not meet requirements. The inventors of the present disclosure found that because data used for modeling is inconsistent with online data, it is difficult to ensure the consistency of features calculated in the modeling process, resulting in a great difference between the online and offline model effect, which fails to meet expectations, so that it is difficult for the model to go online.

The above description of the discovery process of the problem is only used to assist the understanding of the technical solutions of the present disclosure, and does not represent an admission that the above content is the prior art.

### SUMMARY

In order to solve at least one problem existing in the prior art, at least one embodiment of the present disclosure provides a method, device, electronic apparatus, and storage medium for applying machine learning.

In a first aspect, an embodiment of the present disclosure proposes a method for applying machine learning, the method includes acquiring a relevant data stream of a specified business scenario online based on a data service interface; accumulating data in the relevant data stream into a first database; exploring a model scheme based on the data in the first database when a first preset condition is satisfied; the model scheme includes scheme sub-items of a feature engineering scheme, a model algorithm, and a model hyperparameter; deploying the explored model scheme to be launched to provide a model online prediction service, wherein the model online prediction service is performed based on the relevant data stream of the specified business scenario acquired online by the data service interface.

In a second aspect, an embodiment of the present disclosure proposes a device for applying machine learning, the device includes a data management module configured to acquire a relevant data stream of a specified business scenario online based on a data service interface; accumulate data in the relevant data stream into a first database; a model scheme exploration module configured to explore a model scheme based on the data in the first database when a first preset condition is satisfied; the model scheme includes scheme sub-items of a feature engineering scheme, a model algorithm, and a model hyperparameter; a model online prediction service module is configured to deploy the model scheme obtained by the model scheme exploration module to be launched to provide a model online prediction service, wherein the model online prediction service is performed based on the relevant data stream of the specified business scenario acquired online by the data service interface.

In a third aspect, an embodiment of the present disclosure provides an electronic apparatus, including: a processor and a memory; the processor is configured to perform steps of the method for applying machine learning as described in the first aspect by invoking a program or an instruction stored in the memory.

In a fourth aspect, an embodiment of the present disclosure provides a computer-readable storage medium configured to store programs or instructions, the programs or instructions cause a computer to perform steps of the method for applying machine learning as described in the first aspect.

In a fifth aspect, an embodiment of the present disclosure further provides a computer program product comprising computer program instructions which, when executed on a computer device, implement steps of the method for applying machine learning as described in the first aspect.

It can be seen that in at least one embodiment of the present disclosure, the business scenario is directly connected, the data related to the business scenario is accumulated for exploring the model scheme to obtain the model scheme and the offline model, so as to ensure that the data used in the exploration of the offline model scheme and the data used in the model online prediction service is of the same origin, realizing the homology of offline and online data. To avoid the problem that the prediction effect of the offline model deployed to be launched is poor due to the inconsistency between the data obtained from online feature calculation and offline feature calculation after the offline model is directly deployed to be launched, only the model scheme is deployed to be launched, but the offline model is not deployed to be launched. After the model scheme is deployed to be launched, the sample data with features and feedback may be obtained by receiving the prediction request (that is, the data of the request data stream), model self-learning is performed by using the sample data with features and feedback, and the model obtained by self-learning may be deployed to be launched to ensure that the data and the feature engineering scheme used in the model self-learning are consistent with the data and the feature engineering scheme used in the model online prediction service, so that the model self-learning effect and the model prediction effect are consistent.

### BRIEF DESCRIPTION

In order to illustrate the technical solutions of the embodiments of the present disclosure more clearly, the following briefly introduces the accompanying drawings that need to be used in the description of the embodiments or the prior art. Obviously, the accompanying drawings in the following description are only some embodiments of the present disclosure. For those of ordinary skill in the art, other drawings may also be obtained according to these drawings.
FIG. 1 is an exemplary architecture diagram of a device for applying machine learning provided by an embodiment of the present disclosure;
FIG. 2 is an exemplary architecture diagram of another device for applying machine learning provided by an embodiment of the present disclosure;
FIG. 3 is an exemplary flow logic block diagram of a device for applying machine learning shown in FIG. 2;
FIG. 4 is an exemplary data flow diagram of a device for applying machine learning shown in FIG. 2;
FIG. 5 is an exemplary architecture diagram of an electronic apparatus provided by an embodiment of the present disclosure;
FIG. 6 is an exemplary flowchart of a method for applying machine learning provided by an embodiment of the present disclosure.

### DETAILED DESCRIPTION

In order to more clearly understand the above objects, features and advantages of the present disclosure, the present disclosure will be further described in detail below with reference to the accompanying drawings and embodiments. It is to be understood that the described embodiments are some, but not all, of the embodiments of the present disclosure. The specific embodiments described herein are only used to explain the present disclosure, but not to limit the present disclosure. Based on the described embodiments of the present disclosure, all other embodiments obtained by those of ordinary skill in the art fall within the protection scope of the present disclosure.

It should be noted that, in this document, relational terms such as "first" and "second" etc. are only used to distinguish one entity or operation from another entity or operation, and it does not necessarily require or imply any such actual relationship or order between these entities or operations.

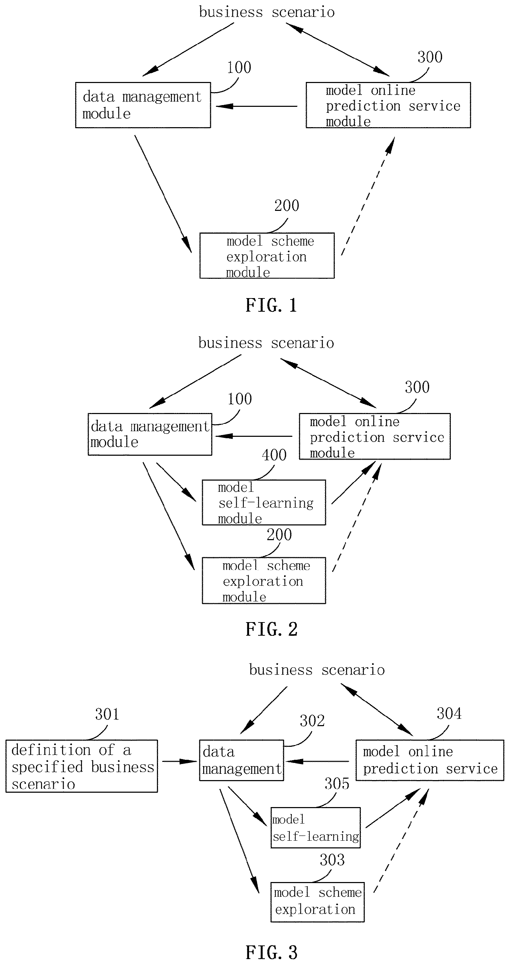

Different business scenarios in all walks of life have different business processing logic, but most of the different business scenarios need to apply machine learning to process business data, which can reduce various problems caused by manual processing of business data, such as time-consuming and high labor costs, inaccuracy, etc. To this end, FIG. 1 is an exemplary architecture diagram of a device for applying machine learning provided by an embodiment of the present disclosure, wherein the device for applying machine learning is suitable for supervised learning artificial intelligence modeling of various types of data, including but is not limited to two-dimensional structured data, images, natural language processing (NLP), speech, etc. The device for applying machine learning may be applied to a specified business scenario, wherein the specified business scenario pre-defines information about a relevant data stream of the business scenario, wherein the relevant data stream may include but is not limited to a request data stream, a presentation data stream, a feedback data stream, and a business data stream, wherein data of the presentation data stream is data presented by the specified business scenario based on the request data stream. Taking a short video application scenario as an example, request data is, for example, that the request data that needs model prediction formed by filtering out a candidate video collection by the application background after a user swiping or clicking on a user terminal to refresh short videos. Presentation data is what short videos the short video application actually shows to the user. Feedback data is, for example, whether the user clicks or watches a short video presented by the short video application. Business data is, for example, data related to business logic, such as comment data and "like" data of the user when watching a short video.

The predefined information about the relevant data stream of the business scenario may be understood as fields included in relevant data. For example, the relevant data stream is a request data stream. Correspondingly, the predefined information about the request data stream may be understood as fields included in request data in the request data stream, the fields may be a user ID, a request content, a request time, a candidate material ID, etc.

After specifying the business scenario, a model online prediction service may be provided through the device for applying machine learning shown in FIG. 1. As shown in FIG. 1, the device for applying machine learning may include, but is not limited to: a data management module 100, a model scheme exploration module 200, a model online prediction service module 300, and other components required for applying machine learning, such as an offline database, an online database etc.

The data management module 100 is configured to store and manage data sourced from the specified business scenario and data generated by the model online prediction service module 300. Herein, the data sourced from the specified business scenario is a relevant data stream obtained online by a data management module 100 directly connecting to the specified business scenario based on a data service interface. The data service interface is an application programming interface (API). In some embodiments, the data service interface is created by the data management module 100 based on pre-defined information about the relevant data stream of the specified business scenario. In some embodiments, the data management module 100 may provide a user interface, and receive information about the relevant data stream of the specified business scenario input by a user based on the user interface. In this embodiment, the user may be an operation and maintenance engineer of the specified business scenario. The data management module 100 may create the data service interface based on the information about the relevant data stream of the specified business scenario input by the user. In some embodiments, the data service interface is one-to-one with the relevant data stream, for example, the request data stream, the presentation data stream, the feedback data stream and the business data stream correspond to different data service interfaces respectively.

In some embodiments, the data management module 100 may accumulate data in the relevant data stream of the specified business scenario into a first database, wherein the first database is an offline database, for example, the offline database may be a hadoop distributed file system (HDFS), or other offline databases. In some embodiments, the data management module 100 may process the data of the request data stream to obtain sample data, wherein the processing methods include, but are not limited to, processing using a filter and flattening. The data management module 100 may accumulate the data of the request data stream, the sample data, data of the feedback data stream and data of the business data stream into the first database. In some embodiments, after the data management module 100 obtains the data of the presentation data stream of the specified business scenario online based on the data service interface, the data management module 100 may use a filter to filter the data of the request data stream based on the data of the presentation data stream, to obtain intersection data. For example, the presentation data stream has 10 pieces of data, the request data stream has 12 pieces of data, and the presentation data stream and the request data stream have 5 pieces of identical data, then the 5 pieces of identical data obtained by the filter filtering is the intersection data, and the different data is filtered out. The data management module 100 may obtain the sample data by flattening the intersection data (the 5 pieces of identical data). The data management module 100 may accumulate the data of the presentation data stream and the sample data obtained by filtering into the first database.

In some embodiments, the data management module 100 may receive data table attribute information input by a user through a user interface, wherein the data table attribute information describes a number of columns included in the data table and data attributes of each column, for example, the data attribute of a user ID is a discrete field, the data attribute of a request time is a time field, and the data attribute of a browsing duration is a numerical field. The data management module 100 may receive a table stitching scheme between the data tables input by the user through the user interface, wherein the table stitching scheme includes stitching keys of stitching different data tables, a quantitative relationship, a timing relationship and an aggregation relationship between the main and auxiliary tables with the same stitching keys. In some embodiments, the data management module 100 may maintain logical relationship information through the first database based on the data table attribute information and the table stitching scheme; wherein the logical relationship information is information describing relationships between different data tables, the logical relationship information includes the data table attribute information and the table stitching scheme.

The model scheme exploration module 200 is configured to explore a model scheme based on the data in the first database (such as one or more of the logical relationship information, the data of the request data stream, the sample data, the data of the feedback data stream and the data of the business data stream, the data of the presentation data stream) when a first preset condition is satisfied. The first preset condition may include at least one of data volume, time, and manual triggering. For example, the first preset condition may be that the data volume in the first database reaches a preset data volume, or a duration of data accumulation in the first database reaches a preset duration. The setting of the first preset condition enables the model scheme exploration module 200 to iteratively update the model scheme. The model scheme includes scheme sub-items of a feature engineering scheme, a model algorithm and a model hyperparameter. The feature engineering scheme is obtained by exploring based on the logical relationship information. Therefore, the feature engineering scheme at least has a table stitching function. It should be noted that the table stitching method of the feature engineering scheme may be the same as or different from the table stitching scheme input by the user. The feature engineering scheme may also have other functions, such as extracting features from data for use by model algorithms or models. The model algorithm may be a currently commonly used machine learning algorithm, such as a supervised learning algorithm, including but not limited to: Logistic Regression (LR), Gradient Boosting Decision Tree (GBDT), Deep Neural Network (DeepNN), etc. The model hyperparameter is a parameter that is preset before machine learning and is configured to assist model training, such as a number of categories in a clustering algorithm, a step size of a gradient descent method, a number of layers of a neural network, and a learning rate of training a neural network, etc.

In some embodiments, the model scheme exploration module 200 may generate at least two model schemes when exploring model schemes, for example, may generate at least two model schemes based on the logical relationship information maintained in the first database. Wherein there is at least one different scheme sub-item between different model schemes. In some embodiments, the model scheme exploration module 200 trains models by adopting the at least two model schemes respectively based on the data in the first database, and may obtain parameters of a model itself, wherein the parameters of the model itself are, for example, weights in a neural network, support vectors in a support vector machine, coefficients in linear regression or logistic regression, etc. In some embodiments, the model scheme exploration module 200 may evaluate the models respectively trained by the at least two model schemes based on a machine learning model evaluation index, and then obtain the explored model scheme by selecting from the at least two model schemes based on the evaluation result. The machine learning model evaluation index is, for example, an Area Under Curve (AUC) value or the like.

The model online prediction service module 300 is configured to deploy the model scheme obtained by the model scheme exploration module 200 to be launched to provide a model online prediction service, wherein the model online prediction service is performed based on the relevant data stream of the specified business scenario acquired online by the data service interface. In some embodiments, the model online prediction service module 300 only deploys the model scheme to be launched, but does not deploy an offline model obtained during the exploration process of the model scheme exploration module 200 to be launched, which may avoid the problem that the prediction effect of the offline model deployed to be launched is poor due to the inconsistency between the data obtained from online feature calculation and offline feature calculation after the offline model is directly deployed to be launched. In addition, because the model online prediction service module 300 only deploys the model scheme to be launched instead of deploying the offline model to be launched, when the model online prediction service is provided, the prediction result will not be generated. When request data is received, what is sent to the specified business scenario is a default prediction result, and the specified business scenario ignores the default prediction result after receiving it, therefore, the model scheme exploration module 200 in FIG. 1 points to the model online prediction service module 300 with a dashed arrow, which indicates that the model scheme will not provide an online prediction service, but will still feed back a default prediction result. In some embodiments, when deploying the model scheme to be launched, the model online prediction service module 300 also deploys the offline model obtained during the exploration process by the model scheme exploration module 200 to be launched, and the offline model is trained based on the relevant data of the specified business scenario accumulated in the first database (i.e., the offline database), and the offline model is deployed to be launched to perform the prediction service based on the relevant data of the specified business scenario. Therefore, although the data obtained through the online and offline feature calculation may be inconsistent, the online and offline data is of the same origin.

In some embodiments, after the model online prediction service module 300 deploys the model scheme to be launched, the relevant data stream of the specified business scenario obtained by the data service interface may be stored in a second database, wherein the second database is an online database, such as a real-time feature storage engine (rtidb). The rtidb is a distributed feature database oriented towards AI hard real-time scenarios and has the characteristics of efficient computing, read-write separation, high concurrency and high-performance query. The second database may also be other online databases. When receiving request data, the model online prediction service module 300 performs online real-time feature calculation by using the data in the second database and the received request data based on the feature engineering scheme in the model scheme deployed to be launched, to obtain feature data of prediction samples. In some embodiments, when receiving the request data, the model online prediction service module 300 performs table stitching and online real-time feature calculation on the data in the second database and the received request data based on the feature engineering scheme in the model scheme deployed to be launched, to obtain wide table feature data, the obtained feature data of the prediction samples is the wide table feature data.

In some embodiments, the model online prediction service module 300 may obtain the feature data (or wide-table feature data) of the prediction samples based on the model scheme deployed to be launched, and stitches the feature data and the feedback data to generate sample data with features and feedback, the sample data may also include other data, such as timestamp data, etc.; the feedback data is derived from the feedback data stream. In some embodiments, before stitching the feature data and the feedback data, the model online prediction service module 300 stitches the feature data and the presentation data to obtain feature data with presentation data(the presentation data is derived from the presentation data stream), and then stitches the feature data with the presentation data and the feedback data to generate sample data with the presentation data, the feature data and the feedback data. In some embodiments, the model online prediction service module 300 returns the sample data with features and feedback to the first database, so as to perform model self-learning, and the model obtained by self-learning may be deployed to be launched to ensure that the data and the feature engineering scheme used in the model self-learning are consistent with the data and the feature engineering scheme used in the model online prediction service, so that the model self-learning effect and the model prediction effect are consistent.

Based on the above description of the data management module 100, the model scheme exploration module 200 and the model online prediction service module 300, it can be seen from FIG. 1 that the data management module 100, the model scheme exploration module 200 and the model online prediction service module 300 constitute a closed-loop for machine learning. Since the data used in the exploration of the model scheme is the data in the first database, and the first database is the offline database, the data used in the exploration of the model scheme may be understood as offline data, and the data used in the model online prediction service is online data, and the offline data and the online data are all obtained from the specified business scenarios by the data service interface. Therefore, the data used in the exploration of the model scheme (referred to as offline data) and the data used in the model online prediction service (referred to as online data) is of the same origin, realizing the homology of offline and online data.

FIG. 2 is another device for applying machine learning provided by an embodiment of the present disclosure. The device for applying machine learning includes, in addition to the data management module 100, the model scheme exploration module 200 and the model online prediction service module 300 shown in FIG. 1, a model self-learning module 400 and other components required for applying machine learning, such as offline databases, online databases, and so on.

The model self-learning module 400 is configured to perform model self-learning based on sample data with features and feedback in a first database when a second preset condition is satisfied. The second preset condition may include at least one of data volume, time, and manual triggering. For example, the second preset condition may be that data volume in the first database reaches a preset data volume, or a duration of data accumulation in the first database reaches a preset duration. The setting of the second preset condition may make the model self-learning module 400 iteratively update the model.

In some embodiments, when the second preset condition is satisfied, the model self-learning module 400 performs training through model algorithms and model hyperparameters in the model scheme based on the sample data with features and feedback, to obtain a machine learning model. In some embodiments, if the model online prediction service module 300 deploys an initial model to be launched when the model scheme is deployed to be launched, wherein the initial model is an offline model generated during the model scheme exploration module 200 exploring the model scheme, the model self-learning module 400 trains the initial model through the model algorithms and the model hyperparameters in the model scheme, to update parameter values of the initial model itself to obtain the machine learning model. In some embodiments, if the model online prediction service module 300 does not deploy the initial model to be launched when the model scheme is deployed to be launched, the model self-learning module 400 trains a random model by using the model algorithms and the model hyperparameters in the model scheme to obtain the machine learning model, wherein the random model is a model generated based on the model algorithms, and the parameter values of the model itself take random values.

The model online prediction service module 300 may deploy the model obtained by the model self-learning module 400 to be launched to provide the model online prediction service. In some embodiments, after deploying the model obtained by the model self-learning module 400 to be launched, when receiving request data, the model online prediction service module 300 generates prediction samples with features based on the data in the second database and the received request data, and obtains a prediction result of the prediction samples through the model deployed to be launched. The difference from the model scheme is that the model deployed to be launched may obtain the prediction result of the prediction samples. The model online prediction service module 300 may send the prediction result to the specified business scenario for use or reference in the business scenario.

In some embodiments, the model online prediction service module 300 may replace a machine learning model that has been deployed to be launched with the model obtained by the model self-learning module 400; or, deploy the model obtained by the model self-learning module 400 to be launched and provide the model online prediction service together with the machine learning model that has been deployed to be launched. In some embodiments, the model online prediction service module 300 may replace the model scheme that has been deployed to be launched with the model scheme obtained by the model scheme exploration module 200; or, deploy the model scheme obtained by the model scheme exploration module 200 to be launched without taking the model scheme that has been deployed to be launched offline.

Based on the above description about the model self-learning module 400 and the model online prediction service module 300, it can be seen from FIG. 2 that the data management module 100, the model self-learning module 400 and the model online prediction service module 300 constitute a closed loop for machine learning, since the sample data with features and feedback used to train the model by the model self-learning module 400 is generated online based on the data in the second database (that is, the online database) and the received request data after the model scheme is deployed to be launched, and the model online prediction service module 300 also provides the prediction service based on the data in the second database after deploying the model trained by the model self-learning module 400 to be launched, it is ensured that the data and the feature engineering scheme used in the model self-learning are consistent with the data and the feature engineering scheme used in the model online prediction service respectively, so that the model self-learning effect and the model prediction effect are consistent.

In some embodiments, the division of each module in the device for applying machine learning is only a logical function division, and there may be other division methods in actual implementation, such as at least two of the data management module 100, the model scheme exploration module 200, the model online prediction service module 300 and the model self-learning module 400 may be implemented as one module; the data management module 100, the model scheme exploration module 200, the model online prediction service module 300 or the model self-learning module 400 may also be divided into multiple sub-modules. It can be understood that each module or sub-module may be implemented in electronic hardware, or a combination of computer software and electronic hardware. Whether these functions are performed in hardware or software depends on specific applications and design constraints of technical solutions. Those skilled in the art may use different methods for implementing the described functionality for each particular application.

FIG. 3 is an exemplary process logic block diagram of a device for applying machine learning shown in FIG. 2. As shown in FIG. 3, in a definition of a specified business scenario 301, a user may input information of a relevant data stream of the specified business scenario through a user interface, the user may also input data table attribute information and a table stitching scheme through the user interface during model scheme exploration 303. In FIG. 3, data management 302, model self-learning 305, and model online prediction service 304 form a small closed loop; data management 302, model scheme exploration 303, and model online prediction service 304 form a large closed loop. Among them, the small closed loop ensures that data and feature engineering schemes used in the model self-learning 305 are respectively the same as data and feature engineering schemes used in the model online prediction service 304, so as to achieve the consistency of the model self-learning effect and the model prediction effect. The large closed-loop ensures that data used in the model scheme exploration 303 (referred to as offline data) and data used in the model online prediction service 304 (referred to as online data) is of the same origin, realizing the homology of offline and online data.

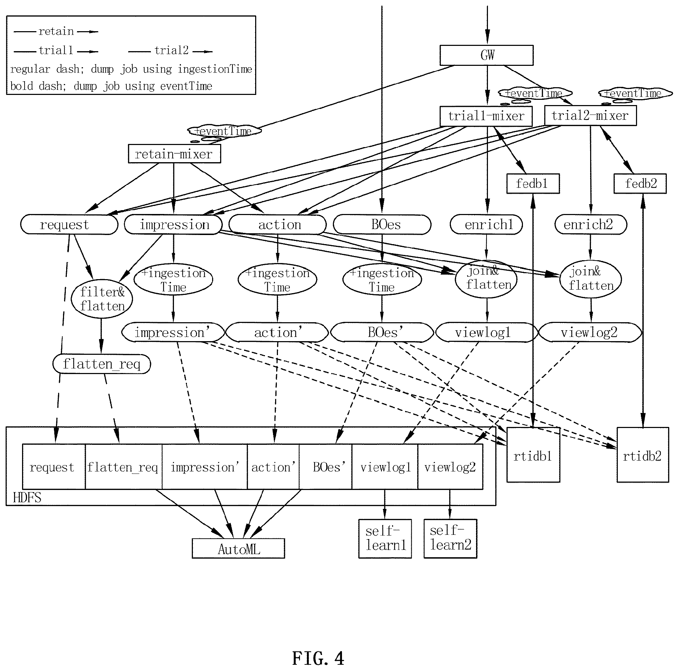

FIG. 4 is an exemplary data flow diagram of a device for applying machine learning shown in FIG. 2. The words in FIG. 4 are explained as follows:
"GW" is a gateway of a specified business scenario;
"retain-mixer" is configured to realize a function of accumulating data in a relevant data stream of the specified business scenario into a first database in the data management module 100;
"trial1-mixer" and "trial2-mixer" may be understood as two parallel model online prediction service modules 300;
"HDFS" is the first database;
"rtidb 1" and "rtidb2" are two second databases;
"AutoML" is a model scheme exploration module 200;
"self-learn 1 " and "self-leam2" are two model self-learning modules 400;
"request" is request data; "impression" is presentation data; "action" is feedback data; "BOes" is business data; "enrich1" and "enrich2" are wide table feature data; "viewlog1" and "viewlog2" are wide table feature data with feedback;
"fedb1" and "fedb2" may be understood as feature engineering schemes in a model scheme.

Based on the above word descriptions, the data flow of the device for applying machine learning is described as follows:
The retainn-mixer obtains the request, the impression, the action, and the BOes from the specified business scenario based on a data service interface, and adds eventTime or ingestionTime to the request, the impression, and the action, respectively, so that the data management module 100 may maintain data timing relationship information in logical relationship information. The addition of eventTime belongs to a data management function of the data management module 100.

The retain-mixer accumulates the request into the HDFS for subsequent operation and maintenance. The retain-mixer adds ingestionTime to the impression, the action and the BOes respectively, to obtain impression', action' and BOes', and accumulates the impression', the action' and the BOes' into the HDFS. The addition of ingestionTime belongs to a data management function of the data management module 100.

The retain-mixer processes the request and the impression through a filter operation, and obtains intersection data. For example, there is 10 pieces of data for the impression, there is 12 pieces of data for the request, and there is 5 pieces of identical data for the request and the impression, then the 5 pieces of identical data are obtained through the filter operation, and the different data is filtered out; and then the intersection data (the 5 pieces of identical data) is processed through a flatten operation to obtain flatten req (sample data). The retain-mixer accumulates the flatten_req into the HDFS.

The AutoML may explore model schemes based on the flatten_req, the impression', the action' and the BOes' in the HDFS.

After the trial1-mixer and the trial2-mixer deploy different model schemes to be launched respectively, the impression', the action' and the BOes' are accumulated in the rtidb1 and the rtidb2, and user's historical data, such as user behavior data, may be synchronized to the rtidb1 and the rtidb2.

After the trial1-mixer and the trial2-mixer deploy different model schemes to be launched respectively, each time a piece of request data is obtained, the accumulated data is obtained from the rtidb1 and the rtidb2 through the fedb1 and the fedb2 for feature engineering, and then the enrich 1 and the enrich2 are obtained.

The trial1-mixer and the trial2-mixer perform join (stitching) and flatten operations on the enrich 1 and the enrich2 with the impression and the action, respectively, to obtain the viewlog1 and the viewlog2. The trial1-mixer and the trial2-mixer accumulate the viewlog1 and the viewlog2 into the HDFS.

The self-learn1 and the self-leam2 perform model self-learning based on the viewlog1 and the viewlog2, respectively, to obtain machine learning models. The trial1-mixer and the trial2-mixer deploy the machine learning models obtained by the self-learn1 and the self-learn2 to be launched, respectively, and provide model online prediction services.

As can be seen from FIG. 4, the data sources of the retain-mixer and the triall-mixer, the trial2-mixer are consistent, and the data is accumulated in the HDFS, it is ensured that the data used by the AutoML and the data used after the model scheme is deployed to be launched is of the same origin, realizing the homology of offline and online data. In addition, the data and the feature engineering schemes used by the self-learn1 and the self-learn2 are consistent with the data and the feature engineering schemes used after the model is deployed to be launched, so as to achieve the consistency of the model self-learning effect and the model prediction effect.

It can be seen that the device for applying machine learning disclosed in this embodiment can collect data from scratch without relying on importing historical offline data from other databases.

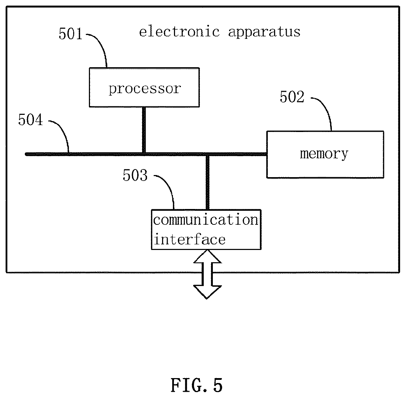

FIG. 5 is a schematic structural diagram of an electronic apparatus provided by an embodiment of the present disclosure. As shown in FIG. 5, the electronic apparatus includes at least one processor 501, at least one memory 502 and at least one communication interface 503. The various components in the electronic apparatus are coupled together by a bus system 504. The communication interface 503 is configured for information transmission with external devices. It can be understood that the bus system 504 is configured to enable connection communication between these components. In addition to a data bus, the bus system 504 also includes a power bus, a control bus, and a status signal bus. However, for the sake of clarity, the various buses are labeled as the bus system 504 in FIG. 5.

It can be understood that the memory 502 in this embodiment may be a volatile memory or a non-volatile memory, or may include both the volatile memory and the non-volatile memory.

In some embodiments, the memory 502 stores elements of executable units or data structures, or subsets thereof, or extended sets of them, such as an operating system and an application.

Herein, the operating system includes various system programs, such as a framework layer, a core library layer, a driver layer, etc., and is configured to implement various basic services and process hardware-based tasks. The application includes various applications, such as a media player, a browser, etc., and is configured to implement various application services. A program for implementing a method for applying machine learning provided by the embodiments of the present disclosure may be included in an application program.

In the embodiment of the present disclosure, the processor 501 calls programs or instructions stored in the memory 502, such as programs or instructions stored in the application program, and the processor 501 is configured to perform the steps of each embodiment of the method for applying machine learning provided by the embodiment of the present disclosure.

The method for applying machine learning provided by the embodiments of the present disclosure may be configured in the processor 501 or implemented by the processor 501. The processor 501 may be an integrated circuit chip with signal processing capability. In the implementation process, each step of the above-mentioned method may be completed by an integrated logic circuit of hardware in the processor 501 or an instruction in the form of software. The above processor 501 may be a general-purpose processor, a digital signal processor (DSP), an application specific integrated circuit (ASIC), a field programmable gate array (FPGA) or other programmable logic devices, discrete gate or transistor logic devices, discrete hardware components. The general-purpose processor may be a microprocessor or the processor may be any conventional processor or the like.

The steps of the method for applying machine learning provided by the embodiments of the present disclosure may be directly embodied as executed by a hardware decoding processor, or executed by a combination of hardware and software units in the decoding processor. The software unit may be located in a random access memory, a flash memory, a read-only memory, a programmable read-only memory or an electrically erasable programmable memory, a register and other storage media mature in the art. The storage medium is located in the memory 502, and the processor 501 reads information in the memory 502, and completes the steps of the method in combination with its hardware.

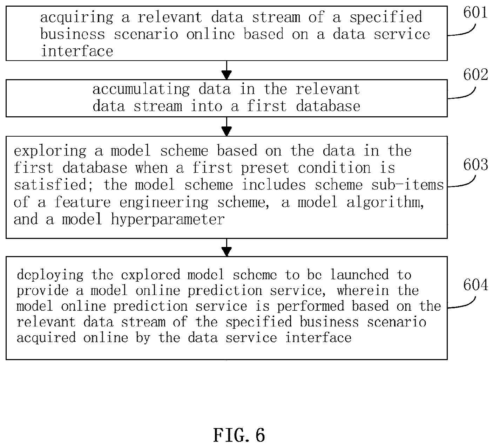

FIG. 6 is an exemplary flowchart of a method for applying machine learning provided by an embodiment of the present disclosure. The execution body of the method is an electronic apparatus. For ease of description, in the following embodiments, the electronic apparatus is used as the main execution body to describe the flow of the method for applying machine learning.

In some embodiments, the electronic apparatus may provide a user interface, and receive information about a relevant data stream of a specified business scenario input by a user, based on the user interface, wherein the relevant data stream includes, but is not limited to, a request data stream, a presentation data stream, a feedback data stream and a business data stream. The information about the relevant data stream of the specified business scenario may be understood as a field included in the relevant data. Further, the electronic apparatus creates a data service interface based on the information about the relevant data stream of the specified business scenario, for example, the request data stream, the presentation data stream, the feedback data stream and the business data stream correspond to different data service interfaces respectively.

In some embodiments, the electronic apparatus may receive data table attribute information input by the user based on the user interface, wherein the data table attribute information describes the number of columns included in the data table and data attributes of each column. The electronic apparatus may also receive a table stitching scheme between the data tables input by the user through the user interface, wherein the table stitching scheme includes stitching keys for stitching different data tables, and a quantitative relationship, a timing relationship and an aggregation relationship of the stitching keys between the main and auxiliary tables. In some embodiments, the electronic apparatus may maintain logical relationship information through a first database based on the data table attribute information and the stitching scheme; wherein the logical relationship information is information describing relationships between different data tables, the logical relationship information includes the data table attribute information and the stitching scheme.

In step 601, the electronic apparatus acquires the relevant data stream of the specified business scenario online based on the data service interface. For example, the electronic apparatus may obtain the presentation data stream of the specified business scenario online based on the data service interface, wherein data of the presentation data stream is data presented by the specified business scenario based on the request data stream.

In step 602, the electronic apparatus accumulates the data in the relevant data stream into the first database. The first database is an offline database. In some embodiments, the electronic apparatus processes data of the request data stream to obtain sample data; and further accumulates the data of the request data stream, the sample data, data of the feedback data stream, and data of the business data stream into the first database. For example, the methods for processing include, but are not limited to, processing using a filter and flattening. In some embodiments, the electronic apparatus uses a filter to filter the data of the request data stream based on the data of the presentation data stream to obtain intersection data; and then flattens the intersection data to obtain the sample data. The electronic apparatus accumulates the presentation data and the filtered sample data into the first database.

In step 603, when a first preset condition is satisfied, the electronic apparatus, based on the data in the first database (such as one or more of the logical relationship information, the data of the request data stream, the sample data, the data of the feedback data stream, the data of the business data stream, and the data of the presentation data stream) explores a model scheme; the model scheme includes scheme sub-items of a feature engineering scheme, a model algorithm and a model hyperparameter. The feature engineering scheme is obtained through exploration based on the logical relationship information. Therefore, the feature engineering scheme at least has a table stitching function. It should be noted that the table stitching method of the feature engineering scheme may be the same as or different from a table stitching scheme input by the user. The feature engineering scheme may also have other functions, such as extracting features from data for use by model algorithms or models. In some embodiments, the first preset condition may include at least one of data volume, time and manual triggering, for example, the first preset condition may be that the data volume in the first database reaches a preset data volume, or a duration of data accumulation in the first database reaches a preset duration.

In some embodiments, the electronic apparatus generates at least two model schemes when the first preset condition is satisfied. For example, at least two model schemes may be generated based on the logical relationship information maintained by the first database, wherein there is at least one different scheme sub-item between different model schemes; further, models are trained by adopting the at least two model schemes respectively based on the data in the first database; then the models trained by the at least two model schemes respectively are evaluated based on a machine learning model evaluation index; finally, the explored model scheme is obtained by selecting from among the at least two model schemes based on an evaluation result.

In step 604, the electronic apparatus deploys the explored model scheme to be launched to provide a model online prediction service, wherein the model online prediction service is performed based on the relevant data stream of the specified business scenario acquired online by the data service interface. In some embodiments, the electronic apparatus only deploys the model scheme to be launched instead of deploying an offline model obtained during the process of exploring the model scheme to be launched, which may avoid the problem that the prediction effect of the offline model deployed to be launched is poor due to the inconsistency between the data obtained from online feature calculation and offline feature calculation after the offline model is directly deployed to be launched. In addition, since only the model scheme is deployed to be launched, and the offline model is not deployed to be launched, when the model online prediction service is provided, the prediction result will not be generated. When request data is received, what is sent to the specified business scenario is a default prediction result, and the specified business scenario ignores the default prediction result after receiving it. In some embodiments, when deploying the model scheme to be launched, the electronic apparatus also deploys the offline model obtained during the process of exploring the model scheme to be launched, and the offline model is trained based on the relevant data of the specified business scenario accumulated in the first database (i.e., the offline database), and the offline model is deployed to be launched to perform the prediction service based on the relevant data of the specified business scenario. Therefore, although the data obtained through the online and offline feature calculation may be inconsistent, the online and offline data is of the same origin.

In some embodiments, after the electronic apparatus deploys the explored model scheme to be launched, the electronic apparatus stores the data of the relevant data stream in a second database, where the second database is an online database. When receiving request data, the electronic apparatus uses the data in the second database and the received request data to perform online real-time feature calculation based on the feature engineering scheme in the model scheme deployed to be launched, and obtains feature data of prediction samples. In some embodiments, after the electronic apparatus deploys the explored model scheme to be launched, when receiving the request data, the electronic apparatus performs table stitching and online real-time feature calculation on the data in the second database and the received request data based on the feature engineering scheme in the model scheme deployed to be launched, to obtain wide table feature data, the obtained feature data of the prediction samples is the wide table feature data.

In some embodiments, the electronic apparatus obtains the feature data (or wide-table feature data) of the prediction samples based on the model scheme deployed to be launched, and stitches the feature data and the feedback data to generate sample data with features and feedback, the sample data may also include other data, such as timestamp data, etc.; the feedback data is derived from the feedback data stream. In some embodiments, before stitching the feature data and the feedback data, the electronic apparatus stitches the feature data and the presentation data to obtain feature data with presentation data, the presentation data is derived from the presentation data stream, and then stitches the feature data with the presentation data and the feedback data to generate sample data with the presentation data, the feature data and the feedback data.

In some embodiments, the electronic apparatus returns the sample data with features and feedback to the first database, and when a second preset condition is satisfied, performs model self-learning based on the sample data with features and feedback in the first database. Herein, the second preset condition may include at least one of data volume, time, and manual triggering. For example, the second preset condition may be that data volume in the first database reaches a preset data volume, or a duration of data accumulation in the first database reaches a preset duration.

In some embodiments, when the second preset condition is satisfied, the electronic apparatus may, based on the sample data with features and feedback, perform training through the model algorithms and the model hyperparameters in the model scheme to obtain a machine learning model. In some embodiments, if the electronic apparatus deploys the model scheme to be launched, and also deploys an initial model to be launched, where the initial model is an offline model generated in the process of exploring the model scheme, the electronic apparatus trains the initial model through the model algorithms and the model hyperparameters in the model scheme, updates the parameter values of the initial model itself, and obtains the machine learning model. In some embodiments, if the electronic apparatus does not deploy the initial model to be launched when deploying the model scheme to be launched, the electronic apparatus trains a random model through the model algorithms and the model hyperparameters in the model scheme to obtain the machine learning model, where the random model is a model generated based on the model algorithms, and the parameter values of the model itself take random values.

In some embodiments, the electronic apparatus deploys the machine learning model to be launched to provide the model online prediction service. In some embodiments, after the electronic apparatus deploys the machine learning model to be launched, when receiving request data, it generates prediction samples with features based on the data in the second database and the received request data, and obtains prediction results of the prediction samples through the model deployed to be launched, which is different from the model scheme in that the model deployed to be launched may obtain the prediction results of the prediction samples. The electronic apparatus may send the prediction results to the specified business scenario for use or reference in the business scenario.

In some embodiments, the electronic apparatus replaces a machine learning model that has been deployed to be launched with the model obtained by model self-learning; or, deploys the model obtained by model self-learning to be launched, and provides the model online prediction service together with the machine learning model that has been deployed to be launched. In some embodiments, the electronic apparatus replaces the model scheme that has been deployed to be launched with the explored model scheme; or, deploys the explored model scheme to be launched without taking the model scheme that has been deployed to be launched offline.

It can be seen that, in the method for applying machine learning disclosed in the above embodiments, since the data used in the exploration of the model scheme is the data in the first database, and the first database is the offline database, the data used in the exploration of the model scheme may be understood as offline data, and the data used in the model online prediction service is online data, and the offline data and the online data are all obtained from the specified business scenarios by the data service interface. Therefore, it is ensured that the data used in the exploration of the model scheme (referred to as offline data) and the data used in the model online prediction service (referred to as online data) is of the same origin, realizing the homology of offline and online data.

In addition, in the method for applying machine learning disclosed in the above embodiments, since the sample data with features and feedback used by the model self-learning is generated online based on the data in the second database (that is, the online database) and the received request data after the model scheme is deployed to be launched, and the prediction service is provided based on the data in the second database after deploying the model trained by the model self-learning module to be launched, therefore, it is ensured that the data and the feature engineering scheme used by the model self-learning are consistent with the data and the feature engineering scheme used by the model online prediction service respectively, so that the model self-learning effect and the model prediction effect are consistent.

It should be noted that, for the sake of simple description, the foregoing method embodiments are all expressed as a combination of a series of action, but those skilled in the art can understand that the embodiments of the present disclosure are not limited by the described action sequences, because certain steps may be performed in other orders or simultaneously in accordance with embodiments of the present disclosure. In addition, those skilled in the art can understand that the embodiments described in the specification are all optional embodiments.

The embodiments of the present disclosure also provide a computer-readable storage medium, where the computer-readable storage medium stores programs or instructions, the programs or instructions cause a computer to execute the steps of each embodiment of the method for applying machine learning, in order to avoid repeated descriptions , and will not be repeated here.

The embodiments of the present disclosure also provide a computer program product, which includes computer program instructions, and when the computer program instructions are run on a computer device, the method steps of various embodiments of the present disclosure may be executed, for example, the computer program instructions, when run by a processor, cause the processor to perform the method steps of various embodiments of the present disclosure.

The computer program product may write program code for performing operations of the embodiments of the present disclosure in any combination of one or more programming languages, including object-oriented programming languages, such as Java, C++, etc., and also including conventional procedural programming languages, such as "C" language or similar programming languages. The program code may be executed entirely on a user computing device, partly on the user device, as a stand-alone software package, partly on the user computing device and partly on a remote computing device, or entirely on the remote computing device or a server.

It should be noted that, herein, the terms "comprising", "including" or any other variation thereof are intended to encompass non-exclusive inclusion, such that a process, method, article or device comprising a series of elements includes not only those elements, but also includes other elements not expressly listed or inherent to such a process, method, article or device. Without further limitation, an element defined by the phrase "comprising" does not preclude the presence of additional identical elements in a process, method, article or device that includes the element.

It will be understood by those skilled in the art that although some of the embodiments described herein include certain features, but not other features, combinations of features of different embodiments are intended to be within the scope of the present disclosure and form different embodiments.

Those skilled in the art can understand that the description of each embodiment has its own emphasis. For parts that are not described in detail in a certain embodiment, reference may be made to the related descriptions of other embodiments.

Although the embodiments of the present disclosure have been described with reference to the accompanying drawings, various modifications and variations may be made by those skilled in the art without departing from the spirit and scope of the present disclosure, and such modifications and variations fall within the scope defined by the appended claims.

### Industrial Applicability

In at least one embodiment of the present disclosure, the business scenario is directly connected, the data related to the business scenario is accumulated for exploring the model scheme to obtain the model scheme and the offline model, so as to ensure that the data used in the exploration of the offline model scheme and the data used in the model online prediction service is of the same origin, realizing the homology of offline and online data. To avoid the problem that the prediction effect of the offline model deployed to be launched is poor due to the inconsistency between the data obtained from online feature calculation and offline feature calculation after the offline model is directly deployed to be launched, only the model scheme is deployed to be launched, but the offline model is not deployed to be launched. After the model scheme is deployed to be launched, the sample data with features and feedback may be obtained by receiving the prediction request (that is, the data of the request data stream), model self-learning is performed by using the sample data with features and feedback, and the model obtained by self-learning may be deployed to be launched to ensure that the data and the feature engineering scheme used in the model self-learning are consistent with the data and the feature engineering scheme used in the model online prediction service, so that the model self-learning effect and the model prediction effect are consistent.

## Claims

1. A method of applying machine learning, the method comprising:
acquiring a relevant data stream of a specified business scenario online based on a data service interface;
accumulating data in the relevant data stream into a first database;
exploring a model scheme based on the data in the first database when a first preset condition is satisfied;
deploying the explored model scheme to be launched to provide a model online prediction service, wherein the model online prediction service is performed based on the relevant data stream of the specified business scenario acquired online by the data service interface.

2. The method according to claim 1, wherein the model scheme comprises scheme sub-items of a feature engineering scheme, a model algorithm, and a model hyperparameter.

3. The method according to claim 1, wherein, before the step of acquiring the relevant data stream of the specified business scenario online based on the data service interface, the method further comprises:
providing a user interface, and receiving information about the relevant data stream of the specified business scenario input by a user based on the user interface;
creating the data service interface based on the information about the relevant data stream of the specified business scenario.

4. The method according to claim 1, wherein the relevant data stream comprises a request data stream, a feedback data stream and a business data stream.

5. The method according to claim 4, wherein the accumulating the data in the relevant data stream into the first database comprises:
processing data of the request data stream to obtain sample data;
accumulating the data of the request data stream, the sample data, data of the feedback data stream and data of the business data stream into the first database.

6. The method according to claim 5, wherein the relevant data stream further comprises a presentation data stream; wherein data of the presentation data stream is data presented by the specified business scenario based on the request data stream;
wherein the processing the data of the request data stream to obtain the sample data comprises: filtering the data of the request data stream based on the data of the presentation data stream to obtain intersection data; processing the intersection data to obtain the sample data;
wherein the data of the presentation data stream and the sample data are accumulated into the first database.

7. The method according to any one of claims 1 to 6, wherein the exploring the model scheme based on the data in the first database comprises:
generating at least two model schemes, wherein at least one scheme sub-item is different between different model schemes;
training models by adopting the at least two model schemes respectively, based on the data in the first database;
evaluating the models trained by the at least two model schemes respectively, based on a machine learning model evaluation index;
obtaining the explored model scheme by selecting from the at least two model schemes based on an evaluation result.

8. The method according to claim 7, wherein the method further comprises:
receiving data table attribute information and a table stitching scheme input by a user based on a user interface;
maintaining logical relationship information through the first database, based on the data table attribute information and the table stitching scheme; the logical relationship information is information describing relationships between different data tables;
wherein the generating the at least two model schemes comprises:
generating the at least two model schemes based on the logical relationship information.

9. The method according to claim 8, wherein,
the table stitching scheme comprises stitching keys, time sequence relationships and aggregation relationships for stitching different data tables;
the logical relationship information comprises the data table attribute information and the table stitching scheme.

10. The method according to any one of claims 1 to 6, wherein after the explored model scheme is deployed to be launched, the method further comprises:
storing the data of the relevant data stream in a second database; the second database supports online real-time feature calculation;
performing online real-time feature calculation by using the data in the second database and received request data based on a feature engineering scheme in the model scheme deployed to be launched to obtain feature data of prediction samples when the request data is received.

11. The method according to claim 10, wherein the performing online real-time feature calculation by using the data in the second database and the received request data comprises:
performing table stitching and online real-time feature calculation on the data in the second database and the received request data based on the feature engineering scheme in the model scheme deployed to be launched, to obtain wide-table feature data;
wherein the feature data of the prediction samples is the wide-table feature data.

12. The method according to claim 10, wherein the method further comprises:
sending a default prediction result to the specified business scenario when the request data is received and a model is not deployed to be launched, after the explored model scheme is deployed to be launched.

13. The method according to claim 10, wherein the deploying the explored model scheme to be launched to provide the model online prediction service comprises:
obtaining the feature data of the prediction samples based on the model scheme deployed to be launched;
stitching the feature data and feedback data to generate sample data with features and feedback; the feedback data is derived from a feedback data stream;
returning the sample data with features and feedback to the first database;
performing model self-learning based on the sample data with features and feedback in the first database when a second preset condition is satisfied;
deploying a model obtained by model self-learning to be launched to provide the model online prediction service.

14. The method according to claim 13, wherein before stitching the feature data and the feedback data, the method further comprises:
stitching the feature data and presentation data to obtain feature data with the presentation data; the presentation data is derived from the presentation data stream;
wherein the feature data with the presentation data and the feedback data are stitched to generate sample data with the presentation data, the feature data and the feedback data.

15. The method according to claim 13, wherein the performing model self-learning based on the sample data with features and feedback in the first database comprises:
performing training through the model algorithm and the model hyperparameter in the model scheme based on the sample data with features and feedback to obtain a machine learning model.

16. The method according to claim 15, wherein the performing training through the model algorithm and the model hyperparameter in the model scheme to obtain the machine learning model comprises:
training an initial model by the model algorithm and the model hyperparameter in the model scheme to obtain the machine learning model; wherein the initial model is a model generated in the process of exploring the model scheme, and when the explored model scheme is deployed to be launched, the initial model is also deployed to be launched.

17. The method according to claim 15, wherein the performing training through the model algorithm and the model hyperparameter in the model scheme to obtain the machine learning model comprises:
training a random model by the model algorithm and the model hyperparameter in the model scheme to obtain the machine learning model; wherein the random model is a model generated based on the model algorithm, and parameter values of the model itself are random values; and when the explored model scheme is deployed to be launched, the random model is not deployed to be launched.

18. The method according to claim 13, wherein the deploying the model obtained by model self-learning to be launched to provide the model online prediction service comprises:
generating prediction samples with features based on the data in the second database and received request data when the request data is received after the model obtained by model self-learning is deployed to be launched, and obtaining a prediction result of the prediction samples through the model deployed to be launched;
sending the prediction result to the specified business scenario.

19. The method according to claim 13, wherein,
the deploying the model obtained by model self-learning to be launched comprises:
replacing a machine learning model that has been deployed to be launched with the model obtained by model self-learning ; or, deploying the model obtained by model self-learning to be launched, and providing the model online prediction service together with the machine learning model that has been deployed to be launched;
the deploying the explored model scheme to be launched comprises:
replacing the model scheme that has been deployed to be launched with the explored model scheme; or, deploying the explored model scheme to be launched without taking the model scheme that has been deployed to be launched offline.

20. The method according to claim 13, wherein the first preset condition and the second preset condition comprise at least one of data volume, time, and manual triggering.

21. An apparatus for applying machine learning, the apparatus comprising:
a data management module configured to acquire a relevant data stream of a specified business scenario online based on a data service interface; accumulate data in the relevant data stream into a first database;
a model scheme exploration module configured to explore a model scheme based on the data in the first database when a first preset condition is satisfied;
a model online prediction service module is configured to deploy the model scheme obtained by the model scheme exploration module to be launched to provide a model online prediction service, wherein the model online prediction service is performed based on the relevant data stream of the specified business scenario acquired online by the data service interface.

22. The apparatus according to claim 21, wherein the model scheme comprises scheme sub-items of a feature engineering scheme, a model algorithm, and a model hyperparameter.

23. The apparatus according to claim 21, wherein the data management module is further configured to:
provide a user interface, and receiving information about the relevant data stream of the specified business scenario input by a user based on the user interface;
create the data service interface based on the information about the relevant data stream of the specified business scenario.

24. The apparatus according to claim 21, wherein the relevant data stream comprises a request data stream, a feedback data stream and a business data stream.

25. The apparatus according to claim 24, wherein the data management module is configured to:
process data of the request data stream to obtain sample data;
accumulate the data of the request data stream, the sample data, data of the feedback data stream and data of the business data stream into the first database.

26. The apparatus according to claim 25, wherein the relevant data stream further comprises a presentation data stream; wherein data of the presentation data stream is data presented by the specified business scenario based on the request data stream;
the data management module is configured to filter the data of the request data stream based on the data of the presentation data stream to obtain intersection data; process the intersection data to obtain the sample data;
the data management module is further configured to accumulate the data of the presentation data stream and the sample data into the first database.

27. The apparatus according to any one of claims 21 to 26, wherein the model scheme exploration module is configured to:
generate at least two model schemes, wherein at least one scheme sub-item is different between different model schemes;
train models by adopting the at least two model schemes respectively, based on the data in the first database;
evaluate the models trained by the at least two model schemes respectively, based on a machine learning model evaluation index;
obtain the explored model scheme by selecting from the at least two model schemes based on an evaluation result.

28. The apparatus according to claim 27, wherein the data management module is further configured to:
receive data table attribute information and a table stitching scheme input by a user based on a user interface;
maintain logical relationship information through the first database, based on the data table attribute information and the table stitching scheme; the logical relationship information is information describing relationships between different data tables;
wherein the model scheme exploration module is configured to generate the at least two model schemes based on the logical relationship information.

29. The apparatus according to claim 28, wherein,
the table stitching scheme comprises stitching keys, time sequence relationships and aggregation relationships for stitching different data tables;
the logical relationship information comprises the data table attribute information and the table stitching scheme.

30. The apparatus according to any one of claims 21 to 26, wherein the model online prediction service module is further configured to:
store the data of the relevant data stream in a second database after deploying the model scheme obtained by the model scheme exploration module to be launched; the second database supports online real-time feature calculation;
performing online real-time feature calculation by using the data in the second database and received request data based on a feature engineering scheme in the model scheme deployed to be launched to obtain feature data of prediction samples when the request data is received.

31. The apparatus according to claim 30, wherein the online real-time feature calculation is performed by the model online prediction service module using the data in the second database and the received request data, comprising:
performing table stitching and online real-time feature calculation on the data in the second database and the received request data based on the feature engineering scheme in the model scheme deployed to be launched, to obtain wide-table feature data;
wherein the feature data of the prediction samples is the wide-table feature data.

32. The apparatus according to claim 30, wherein the model online prediction service module is further configured to:
send a default prediction result to the specified business scenario when the request data is received and a model is not deployed to be launched, after the model scheme obtained by the model scheme exploration module is deployed to be launched.

33. The apparatus according to claim 30, wherein the model online prediction service module is further configured to: obtain the feature data of the prediction samples based on the model scheme deployed to be launched; stitch the feature data and feedback data to generate sample data with features and feedback; the feedback data is derived from a feedback data stream; return the sample data with features and feedback to the first database;
the apparatus further comprises a model self-learning module configured to perform model self-learning based on the sample data with features and feedback in the first database when a second preset condition is satisfied;
the model online prediction service module is further configured to deploy a model obtained by the model self-learning module to be launched to provide the model online prediction service.

34. The apparatus according to claim 33, wherein the model online prediction service module is further configured to stitch the feature data and presentation data to obtain feature data with the presentation data before stitching the feature data and the feedback data; the presentation data is derived from the presentation data stream;
wherein the model online prediction service module is configured to stitch the feature data with the presentation data and the feedback data to generate sample data with the presentation data, the feature data and the feedback data.

35. The apparatus according to claim 33, wherein the model self-learning module is configured to:
perform training through the model algorithm and the model hyperparameter in the model scheme based on the sample data with features and feedback to obtain a machine learning model.

36. The apparatus according to claim 35, wherein the model self-learning module is configured to:
train an initial model by the model algorithm and the model hyperparameter in the model scheme to obtain the machine learning model; wherein the initial model is a model generated in the process of the model scheme exploration module exploring the model scheme, and when the model online prediction service module deploys the model scheme obtained by the model scheme exploration module to be launched, it also deploys the initial model to be launched.

37. The apparatus according to claim 35, wherein the model self-learning module is configured to:
train a random model by the model algorithm and the model hyperparameter in the model scheme to obtain the machine learning model; wherein the random model is a model generated based on the model algorithm, and parameter values of the model itself are random values; and when the model online prediction service module deploys the model scheme obtained by the model scheme exploration module to be launched, it does not deploy the random model to be launched.

38. The apparatus according to claim 33, wherein the model online prediction service module is configured to:
generating prediction samples with features based on the data in the second database and received request data when the request data is received after the model obtained by the model self-learning module is deployed to be launched, and obtaining a prediction result of the prediction samples through the model deployed to be launched;
send the prediction result to the specified business scenario.

39. The apparatus according to claim 33, wherein,
the model online prediction service module is configured to:
replace a machine learning model that has been deployed to be launched with the model obtained by the model self-learning module; or, deploy the model obtained by the model self-learning module to be launched, and provide the model online prediction service together with the machine learning model that has been deployed to be launched;
the model online prediction service module is configured to:
replace the model scheme that has been deployed to be launched with the model scheme obtained by the model scheme exploration module ; or, deploy the model scheme obtained by the model scheme exploration module to be launched without taking the model scheme that has been deployed to be launched offline.

40. The apparatus according to claim 33, wherein the first preset condition and the second preset condition comprise at least one of data volume, time, and manual triggering.

41. An electronic apparatus, comprising:
a processor and a memory;
the processor is configured to perform steps of a method of any one of claims 1 to 20 by invoking programs or instructions stored in the memory.

42. A computer-readable storage medium storing programs or instructions that cause a computer to perform steps of a method of any one of claims 1 to 20.

43. A computer program product comprising computer program instructions which, when executed on a computer device, implement steps of a method of any one of claims 1 to 20.
